# EUROPÄISCHE PATENTSCHRIFT

(11) **EP 4 545 933 B1**
(45) Veröffentlichungstag und Bekanntmachung des Hinweises auf die Patenterteilung: **23.09.2026**
(21) Anmeldenummer: 23205365.2
(22) Anmeldetag: 23.10.2023
(51) Int. Cl.: G01N 7/10

(54) **VORRICHTUNG UND VEFAHREN ZUR TAU- BZW. FROSTPUNKTTEMPERATURBESTIMMUNG EINES GASES**
DEVICE AND METHOD FOR THAWING OR THAWING. FROST POINT TEMPERATURE DETERMINATION OF A GAS
DISPOSITIF ET PROCÉDÉ DE TAU OU DE TAU. DÉTERMINATION DE LA TEMPÉRATURE DU POINT DE CONGÉLATION D'UN GAZ

(43) Veröffentlichungstag der Anmeldung: 30.04.2025
(73) Patentinhaber: DILO Armaturen und Anlagen GmbH, 87727 Babenhausen (DE); Forschungszentrum Jülich GmbH, 52425 Jülich (DE)
(72) Erfinder: Jostschulte, Klaus, 87727 Babenhausen (DE); Pilzecker, Peter, 87727 Babenhausen (DE); Dreier, Niklas, 87727 Babenhausen (DE); Hoven, Carsten, 52428 Jülich (Forschungszentrum Jülich GmbH) (DE)
(74) Vertreter: Patentanwälte Olbricht, Buchhold, Keulertz Partnerschaft mbB

(56) Entgegenhaltungen:
- US-A- 3 546 922
- ROSCOE L BLOSS ET AL: "Precision measurement and calibration : selected NBS papers on mechanics NBS SP 300v8", 1 January 1972 (1972-01-01), pages 1 - 592, XP061046864, Retrieved from the Internet <URL:https://nvlpubs.nist.gov/nistpubs/Legacy/SP/nbsspecialpublication300v8.pdf> [retrieved on 19720101], DOI: 10.6028/NBS.SP.300V8

## Beschreibung

Eine spezielle Anwendung der Gassensorik und Gasanalytik ist die Bestimmung des Feuchteanteils in einem Gas. Für diese Aufgabe gibt es unterschiedliche technische Ansätze.

Kapazitive Sensoren nutzen die Änderung der Dielektrizitätszahl eines Dielektrikums, wenn sich die Anzahl der Wassermoleküle im Dielektrikum ändert. Solche Sensoren verwenden einen Kondensator mit einem Stoff als Dielektrikum, der hydrophil ist, sodass Wassermoleküle aus einem umgebenden Medium in das Dielektrikum hineindiffundieren können. Abhängig von der Feuchte des umgebenden Mediums stellt sich ein Gleichgewicht ein. Die sich hierbei ergebende Dielektrizitätszahl kann durch geeignete elektrische Ansteuerung des Kondensators gemessen werden. Aus dem Kapazitätswert lässt sich damit auf den Feuchtegehalt des umgebenden Mediums schließen. Nachteilig an diesem Verfahren ist, dass der Diffusionsprozess relativviel Zeit in Anspruch nimmt.

Bei einem weiteren Verfahren wie der Gaschromatografie werden die einzelnen Moleküle eines Gasgemisches durch unterschiedliche Siedepunkte und Dampfdrücke mittels eines Trägergases getrennt. Am Ausgang einer Säule kann somit zu einem gewissen Zeitpunkt der Messung der Austritt des gesuchten Stoffes, beispielsweise Wasser, beobachtet werden. Die Stärke des Auftretens lässt dann auf den Feuchtegehalt des Probengases schließen. Die Gaschromatografie eignet sich sehr gut für eine Laboranalyse von Gasen. Sie ist allerdings aufwändig und benötigt ein Trägergas. Ihr Einsatz zur schnellen und kostengünstigen Bestimmung eines Feuchtewertes ist demnach nicht sehr verbreitet.

Reflektorische Taupunkt-Sensoren, die mit einem Spiegel zur Bestimmung des Taupunkts arbeiten, nutzen den Effekt aus, dass bei sinkender Temperatur die Sättigung der Feuchtigkeit in der Gasprobe zunimmt. Wenn die Sättigung 100% erreicht, setzen sich Wassermoleküle an einer Oberfläche des Spiegels ab und kondensieren. Dabei bilden sie Tau oder Frost, wodurch sich die Reflektionseigenschaften des Spiegels verändern. Dies wird entsprechend detektiert. Der dabei anliegende Temperaturwert und Druck gibt dann Aufschluss über die Konzentration des Feuchtegehalts im untersuchten Gas.

Liegt die Temperatur der beginnenden Kondensation über 0° C spricht man von der Taupunkttemperatur, liegt die Temperatur unterhalb von 0° C, kann sich die Tauschicht in eine Reifschicht umwandeln und man spricht von einer Frostpunkttemperatur.

Im Rahmen dieser Erfindung werden Taupunkttemperatur und Frostpunkttemperatur weitestgehend synonym verwendet.

Das Verfahren der reflektorischen Taupunktbestimmung bietet eine hohe Genauigkeit, jedoch ist das Sensorsystem sehr aufwändig aufgebaut und muss genau kalibriert und justiert werden. Weiterhin erfordert das System eine gewisse Größe. Zusätzlich wird für das Aufheizen und Kühlen des Spiegelkörpers aufgrund dessen Masse viel Energie benötigt. Dieses schränkt den Einsatz in mobilen Messgeräten ein.

Aufgabe der Erfindung ist es, die vorgenannten Nachteile zu überwinden und eine schnelle und günstige Vorrichtung und Methode zur Frostpunkttemperaturbestimmung bereitzustellen.

Diese Aufgabe wird erfindungsgemäß gelöst durch die Merkmale des Vorrichtungsanspruchs 1 und des Verfahrensanspruchs 11.

Die erfindungsgemäße Vorrichtung zur Frostpunkttemperaturbestimmung eines Gases mit einer Zwischenschicht mit wenigstens einer Öffnung, einer Temperaturmesseinrichtung, einer ersten Druckmesseinrichtung, angeordnet in einer Gasstromrichtung mit im Wesentlichen konstantem Gasfluß vor der Zwischenschicht, und einer zweiten Druckmesseinrichtung, angeordnet in Gasstromrichtung nach der Zwischenschicht.

Ein Vorteil dieser Vorrichtung ist der einfache und robuste Aufbau. Die wenigstens eine Öffnung wirkt dabei wie ein Widerstand, durch den sich die Druckdifferenz in Gasstromrichtung vor und nach der Zwischenschicht bildet. Liegt die Temperatur der Zwischenschicht oberhalb oder unterhalb der Frostpunkttemperatur, stellt sich eine stabile Druckdifferenz ein, wobei die Druckdifferenz oberhalb der Frostpunkttemperatur kleiner ist als unterhalb der Frostpunkttemperatur. Erst mit dem Erreichen der Frostpunkttemperatur von einer höheren Temperatur setzen sich Wassermoleküle aus dem Gasstrom an der wenigstens einen Öffnung ab und verengen die wenigstens eine Öffnung. Diese Verengung erhöht den Widerstand der wenigstens einen Öffnung, was zu einer Erhöhung des Drucks in Gasstromrichtung vor der Zwischenschicht führt, ohne dabei den Druck in Gasstromrichtung nach der Zwischenschicht zu erhöhen. Somit steigt die Druckdifferenz. Bei Erreichen der Frostpunkttemperatur von einer tieferen Temperatur sublimieren die Wassermoleküle und geben den Gasstrom weiter frei.

Erfindungsgemäß wird also ausgenutzt, dass sich bei Auftreten von Kondensation in der Öffnung deren freier Querschnitt ändert, wodurch sich eine Druckdifferenz eines von der ersten Druckmesseinrichtung ersten Druckes und eines zweiten Druckes, der von der zweiten Druckmesseinrichtung ermittelt wird, ändert. Die Änderung der Druckdifferenz gibt in Verbindung mit einer mit der Temperaturmesseinrichtung ermittelten Temperatur und des vorherrschenden Druckes Aufschluss über den Frostpunkt und damit über den Feuchtigkeitsgehalt des Gases.

Vorteilhafterweise sind die Druckmesseinrichtungen messtechnisch miteinander verbunden und eingerichtet, eine Druckdifferenz zu messen. Die Messung des absoluten Drucks beidseitig der Zwischenschicht stellt hohe Anforderungen an die Druckmesseinrichtungen. Die Messung einer Druckdifferenz mit einer Messbrücke, also durch die messtechnische Verbindung der Druckmesseinrichtungen, ist dagegen einfacher und kostengünstiger.

Gemäß der Erfindung ist die Zwischenschicht thermisch mit einem Thermoelement verbunden.

Das Thermoelement kann dabei als Heiz- oder Kühlelement ausgebildet sein, um die Temperatur der Zwischenschicht gezielt zu erhöhen oder zu erniedrigen, bis durch Erreichen der Frostpunkttemperatur einer Veränderung der mittels erster und zweiter Druckmesseinrichtung ermittelter Druckdifferenz erfolgt. Die direkte Regelung der Temperatur der Zwischenschicht ermöglicht ein genaues und effizientes Temperieren der Zwischenschicht mit relativ geringem Energieverbrauch.

Besonders vorteilhaft ist die Verwendung eines Peltier-Elements als Thermoelement. Ein Peltier-Element ist relativ genau steuerbar und kann sowohl Heizen als auch Kühlen. Es ermöglicht damit eine feinschrittige Temperaturanpassung und einen universellen Einsatz.

In einer vorteilhaften Ausgestaltung teilt die Zwischenschicht einen gasdurchströmten Raum in einen ersten Subraum und einen zweiten Subraum und der erste Subraum ist in Gasstromrichtung vor der Zwischenschicht angeordnet und der zweite Subraum ist in Gasstromrichtung nach der Zwischenschicht angeordnet. Die erste Druckmesseinrichtung ermittelt dann den Druck im ersten Subraum, während die zweite Druckmesseinrichtung dem zweiten Subraum zugeordnet ist.

Die wenigstens eine Öffnung hat vorzugsweise einen Durchmesser von weniger als 1 mm, besonders bevorzugt weniger als 800 µm, noch weiter bevorzugt weniger als 500 µm. Der Durchmesser der Öffnungen bestimmt die Genauigkeit, mit der ein Frost- bzw. Taupunkt bestimmt werden kann.

Vorzugsweise kann die Zwischenschicht auch mehrere Öffnungen aufweisen. Die Anzahl der Öffnungen ist dabei insbesondere auf die Größe des Gasflusses abgestimmt, wobei eine höhere Anzahl an Öffnungen einen höheren Gasfluß zulässt als eine geringere Anzahl an Öffnungen, Dadurch wird erreicht, dass ein Durchmesser der Öffnungen auch bei einem gegebenenfalls erforderlichen hohen Gasfluss ausreichend klein gewählt werden kann, um eine Änderung der Druckdifferenz beim Erreichen der Frostpunkttemperatur sicher zu stellen.

Vorzugsweise ist die Zwischenschicht scheibenförmig ausgebildet, weist also eine Dicke auf, die deutlich geringer als eine Höhe und eine Breite der Zwischenschicht ist. Damit kann die Zwischenschicht mit relativ wenig Material hergestellt werden und dementsprechend einen geringen thermischen Widerstand aufweisen.

In einer vorteilhaften Ausgestaltung ist die Zwischenschicht als Lochblende ausgeführt. Eine Lochblende, insbesondere eine dünne Lochblende, die vorteilhaft aus einem Material mit hoher Wärmeleitfähigkeit wie beispielsweise einem Metall gebildet ist, ist schnell und energieeffizient zu kühlen bzw. zu heizen. Je dünner die Lochblende bzw. um so weniger Material die Lochblende aufweist, desto weniger Energie ist notwendig, um eine Temperaturänderung der Lochblende hervorzurufen.

In einer weiteren vorteilhaften Ausgestaltung besteht die Zwischenschicht aus einem porösen Material. Unter einem porösen Material versteht man hierbei ein Material mit einer offenen Porosität, also Hohlräumen innerhalb des Materials, die untereinander und mit der Umgebung in Verbindung stehen. Die einzelnen Poren des porösen Materials stellen dann die Öffnungen dar.

In einer vorteilhaften Ausgestaltung ist die wenigstens eine Öffnung in ihrer Größe verstellbar ausgeführt. Mit wenigstens einer variablen Öffnung lässt sich die Vorrichtung zur Frostpunktbestimmung für verschiedene Gasströme mit verschiedenen zu erwartenden Frostpunkttemperaturen und verschiedenen Durchflussmengen und Geschwindigkeiten einrichten.

In einer weiteren vorteilhaften Ausgestaltung ist der Zwischenschicht eine Blende vorgeschaltet. Dies stellt eine relativ einfache Möglichkeit dar, einen im Wesentlichen konstanten Gasstrom innerhalb der Vorrichtung zu erzeugen. Eine Blendenöffnung kann dann vorzugsweise in der Größenordnung der Summe der Öffnungen der Zwischenschicht liegen, aber je nach Anforderung auch größer oder kleiner sein.

In einer alternativen Ausgestaltung ist der Zwischenschicht eine Blende nachgeschaltet Auch damit kann ein im Wesentlichen konstanter Gasstrom in der Vorrichtung zu erzeugen. Eine Blendenöffnung kann dann vorzugsweise in der Größenordnung der Summe der Öffnungen der Zwischenschicht liegen, aber auch je nach Anforderung größer oder kleiner sein.

Das erfindungsgemäße Verfahren, welches insbesondere in Verbindung mit der erfindungsgemäßen Vorrichtung zu Anwendung kommen kann, umfasst die folgenden Schritte:
a. Leiten eines im Wesentlichen konstanten Gasstromes mit einem bekannten Betriebsdruck durch eine Zwischenschicht mit wenigstens einer Öffnung,
b. Messen von Drücken vor und nach der Zwischenschicht und bilden einer Druckdifferenz daraus;
c. Feststellen einer Änderung der Druckdifferenz;
d. Feststellen einer Temperatur der Zwischenschicht zum Zeitpunkt der Änderung der Druckdifferenz als Frostpunkttemperatur.

Der Gasstrom strömt durch die wenigstens eine Öffnung, wobei es ausgehend von einer über der Tau- bzw. Frostpunkttemperatur liegenden Temperatur durch eine Verringerung der Temperatur der Zwischenschicht und damit des durch die mindestens eine Öffnung strömenden Gasstromes beim Erreichen der Taupunkttemperatur zu Kondensation von Wassermolekülen aus dem Gasstrom beziehungsweise bei Erreichen des Frostpunktes zu Vereisungen von kondensiertem Wasser kommt. Ausgehend von einer unter der Tau- bzw. Frostpunkttemperatur liegenden Temperatur erfolgt eine Erhöhung der Temperatur, bis es zur Verringerung von Kondensat beziehungsweise einem Rückgang der Vereisung kommt.

Das Kondensat beziehungsweise die Vereisungen bilden sich insbesondere im Bereich der wenigstens einen Öffnung aus, sodass die wenigstens eine Öffnung durch anhaftenden Tau beziehungsweise anhaftende Eiskristalle verengt wird. Dadurch steigt der Druck vor der Zwischenschicht, also an der ersten Druckmesseinrichtung, ohne dass dabei der Druck nach der Zwischenschicht, also an der zweiten Druckmesseinrichtung, steigt. Die Temperaturmesseinrichtung misst zeitgleich die Temperatur der Zwischenschicht. Steigt zu einem Zeitpunkt der Druck an der ersten Druckmesseinrichtung, ohne dass der Druck an der zweiten Druckmesseinrichtung ansteigt und sich somit eine Druckdifferenz erhöht, ist die Öffnung der Zwischenschicht durch Tau oder Vereisungen verengt und die zu diesem Zeitpunkt gemessene Temperatur der Zwischenschicht entspricht der Taupunkttemperatur beziehungsweise der Frostpunkttemperatur des Gases. Umgekehrt kann bei Erhöhung der Temperatur ein Rückgang des vorbeschriebenen Phänomens beobachtet werden, also ein Sinken des Drucks an der ersten Druckmesseinrichtung ohne ein Sinken des Drucks an der zweiten Druckmesseinrichtung und somit eine Verringerung der Druckdifferenz.

Nach der Erfindung wird die Temperatur der Zwischenschicht stetig oder schrittweise in Richtung des vermuteten Taupunkts beziehungsweise Frostpunkts des Gases verringert oder erhöht.

So kann zunächst ein Temperaturbereich eingestellt werden, der oberhalb oder unterhalb der vermuteten Taupunkttemperatur beziehungsweise Frostpunkttemperatur liegt. Stellt sich eine gleichbleibende Druckdifferenz ein, kann die Temperatur stetig verringert oder erhöht werden, bis sich die Druckdifferenz signifikant ändert. Ist unterhalb des vermuteten Frostpunkts kein oder nur ein geringer Gasfluss bei hoher Druckdifferenz vorhanden, kann die Temperatur stetig erhöht werden, bis die Druckdifferenz abnimmt. Die Temperatur zum Zeitpunkt der Steigerung bzw. Verringerung der Druckdifferenz ist die Taupunkttemperatur beziehungsweise die Frostpunkttemperatur.

In einer weiter vorteilhaften Methode misst eine Messbrücke die Druckdifferenz und ist oberhalb der vermuteten Frostpunkttemperatur abgeglichen und gibt bei einer Änderung dieser Druckdifferenz ein Messsignal aus. Die Messbrücke kann dabei durch eine entsprechende Verschaltung der ersten und zweiten Druckmesseinrichtung gebildet werden.

Mit einer abgeglichenen Messbrücke können Änderungen der Druckdifferenz präzise festgestellt werden. Dabei können verschiedene Brückenschaltungen wie beispielsweise Vollbrücken oder Halbbrücken verwendet werden. Die Druckmesseinrichtungen können dabei beispielsweise Dehnungsmessstreifen oder Piezo-Elemente aufweisen. Durch gängige Abgleichmethoden wird die Messbrücke von unten oder oben an die Tau- bzw. Frostpunkttemperatur angenähert. Eine Änderung der Druckdifferenz bewirkt eine Änderung der Widerstände der Messbrücke, was eine Änderung der Messspannung bewirkt

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigt:

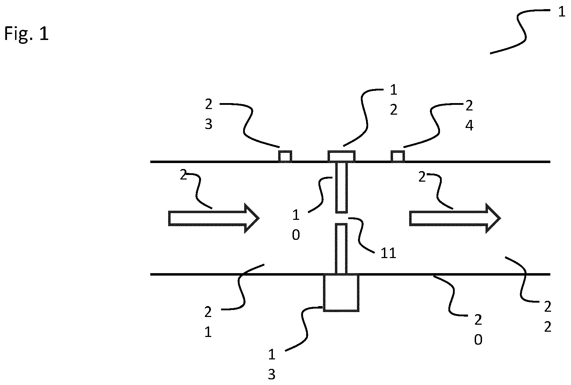

- Fig. 1: einen schematischen Aufbau einer Vorrichtung zur Frostpunktbestimmung.

Fig. 1 zeigt eine Vorrichtung zur Frostpunkttemperaturbestimmung 1 mit einem Gas, das in einem gasdurchströmten Raum 20 in einem im Wesentlichen konstantem Gasstrom 2 in einer Gasstromrichtung auf eine Zwischenschicht 10 trifft. Diese Zwischenschicht 10 weist eine Öffnung 11 auf und ist mit einer Temperaturmesseinrichtung 12 und einem Thermoelement 13 thermisch verbunden. Die Zwischenschicht 10 teilt den gasdurchströmten Raum 20 in einen ersten Subraum 21, der in Gasstromrichtung vor der Zwischenschicht 10 angeordnet ist, und einen zweiten Subraum 22, der in Gasstromrichtung nach der Zwischenschicht 10 angeordnet ist. Im ersten Subraum 21 ist eine erste Druckmesseinrichtung 23 angeordnet. Im zweiten Subraum 22 ist eine Druckmesseinrichtung 24 angeordnet.

Mit Hilfe des Thermoelements 13 lässt sich die Temperatur der Zwischenschicht 10 beeinflussen, bis sich mit Erreichen der Tau- bzw. Frostpunkttemperatur des durch die Öffnung 11 strömenden Gases eine über die Zwischenschicht 10 abfallende Druckdifferenz ändert. Dies wird mittels der ersten und zweiten Druckmesseinrichtung 23, 24 erfasst, wobei die Temperaturmesseinrichtung 12 die Temperatur der Zwischenschicht 10 ermittelt. Daraus und unter Berücksichtigung des vorherrschenden Druckes lässt sich dann ein Feuchtigkeitsgehalt des untersuchten Gases relativ genau bestimmen.

Um den Einfluss des Gasstroms möglichst gering zu halten, wird die Zwischenschicht 10 vorzugsweise mit einem möglichst konstanten Gasstrom 2 durchströmt. Dies lässt sich in einfacher Weise durch eine vor- oder nachgeschaltete, nicht dargestellte Blende erreichen.

Die Erfindung ist nicht auf eine der vorbeschriebenen Ausführungsformen beschränkt, sondern in vielfältiger Weise abwandelbar. Insbesondere die Form der Zwischenschicht sowie die Anzahl und Größe der Öffnungen kann je nach Anforderung an die Messgenauigkeit und Größe des Volumenstromes variieren.

Sämtliche aus der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Vorrichtung zur Frostpunkttemperaturbestimmung
- 2: Konstanter Gasstrom
- 10: Zwischenschicht
- 11: Öffnung
- 12: Temperaturmesseinrichtung
- 13: Thermoelement
- 20: Gasdurchströmter Raum
- 21: erster Subraum
- 22: zweiter Subraum
- 23: erste Druckmesseinrichtung
- 24: zweite Druckmesseinrichtung

## Patentansprüche

1. Vorrichtung (1) zur Frostpunkttemperaturbestimmung eines Gases mit einer Zwischenschicht (10) mit wenigstens einer Öffnung (11), einer Temperaturmesseinrichtung (12), einer ersten Druckmesseinrichtung (23), angeordnet in einer Gasstromrichtung vor der Zwischenschicht (10), und einer zweiten Druckmesseinrichtung (24), angeordnet in Gasstromrichtung nach der Zwischenschicht (10), wobei die Zwischenschicht (10) thermisch mit einem Thermoelement (13) verbunden ist.

2. Vorrichtung nach Anspruch 1, wobei die Zwischenschicht (10) einen gasdurchströmten Raum (20) in einen ersten Subraum (21) und einen zweiten Subraum (22) teilt und der erste Subraum (21) in Gasstromrichtung vor der Zwischenschicht (10) angeordnet ist und der zweite Subraum (22) in Gasstromrichtung nach der Zwischenschicht (10) angeordnet ist.

3. Vorrichtung nach Anspruch 1 oder 2, wobei die Zwischenschicht (10) als Lochblende ausgebildet ist.

4. Vorrichtung nach Anspruch 1 oder 2, wobei die Zwischenschicht (10) aus einem porösen Material besteht.

5. Vorrichtung nach Anspruch 1, wobei das Thermoelement (13) ein Peltier-Element ist.

6. Vorrichtung nach einem der vorangehenden Ansprüche, wobei die beiden Druckmesseinrichtungen (23, 24) eingerichtet sind, eine Änderung einer über die Zwischenschicht (10) abfallenden Druckdifferenz zu erfassen.

7. Vorrichtung nach Anspruch 6, wobei die Druckmesseinrichtungen derart gestaltet sind, dass sie als Widerstände einer Messbrücke dienen und derart angeordnet sind, dass eine Änderung der Druckdifferenz ein Messsignal hervorruft.

8. Vorrichtung nach einem der vorhergehenden Ansprüche, wobei die wenigstens eine Öffnung (11) einen Durchmesser aufweist, der weniger als 1mm, insbesondere weniger als 800µm oder weniger als 500µm beträgt.

9. Vorrichtung nach einem der vorangehenden Ansprüche, wobei in Gasstromrichtung vor der ersten Druckmesseinrichtung (23) eine Blende angeordnet ist.

10. Vorrichtung nach einem der vorangehenden Ansprüche, wobei in Gasstromrichtung nach der zweiten Druckmesseinrichtung (24) eine Blende angeordnet ist.

11. Verfahren zur Frostpunkttemperaturbestimmung eines Gases mit den folgenden Schritten:
a. Leiten eines im Wesentlichen konstanten Gasstromes (2) mit einem Betriebsdruck durch eine Zwischenschicht (10) mit wenigstens einer Öffnung (11);
b. Messen von Drücken vor und nach der Zwischenschicht (10) und bilden einer Druckdifferenz daraus;
c. Feststellen einer Änderung der Druckdifferenz;
d. Feststellen einer Temperatur der Zwischenschicht zum Zeitpunkt der Änderung der Druckdifferenz als Frostpunkttemperatur, wobei zwischen Schritt b. und c. der folgende Schritt ausgeführt wird:
e. Stetiges Verringern oder Erhöhen der Temperatur der Zwischenschicht in Richtung einer vermuteten Frostpunkttemperatur des Gases.

12. Verfahren nach Anspruch 11, wobei eine Messbrücke oberhalb der vermuteten Frostpunkttemperatur abgeglichen wird und bei einer Änderung der Druckdifferenz ein Messsignal ausgibt.

13. Verfahren nach Anspruch 11, wobei eine Messbrücke unterhalb der vermuteten Frostpunkttemperatur abgeglichen wird und bei einer Änderung der Druckdifferenz ein Messignal ausgibt.

## Claims

1. Device (1) for determining the frost point temperature of a gas having an interlayer (10) having at least one opening (11), a temperature measurement device (12), a first pressure measurement device (23) upstream of the interlayer (10) in a gas flow direction, and a second pressure measurement device (24) downstream of the interlayer (10) in gas flow direction, wherein the interlayer (10) is thermally connected to a thermocouple (13).

2. Device according to Claim 1, wherein the interlayer (10) divides a gas flow space (20) into a first subspace (21) and a second subspace (22), and the first subspace (21) is upstream of the interlayer (10) in gas flow direction and the second subspace (22) is downstream of the interlayer (10) in gas flow direction.

3. Device according to Claim 1 or 2, wherein the interlayer (10) takes the form of a pinhole plate.

4. Device according to Claim 1 or 2, wherein the interlayer (10) consists of a porous material.

5. Device according to Claim 1, wherein the thermocouple (13) is a Peltier element.

6. Device according to any of the preceding claims, wherein the two pressure measurement devices (23, 24) are set up to detect a change in a pressure differential across the interlayer (10).

7. Device according to Claim 6, wherein the pressure measurement devices are designed such that they serve as resistors of a measurement bridge and are arranged such that a change in the pressure differential causes a measurement signal.

8. Device according to any of the preceding claims, wherein the at least one opening (11) has a diameter of less than 1 mm, in particular less than 800 µm or less than 500 µm.

9. Device according to any of the preceding claims, wherein there is a diaphragm upstream of the first pressure measurement device (23) in gas flow direction.

10. Device according to any of the preceding claims, wherein there is a diaphragm downstream of the second pressure measurement device (24) in gas flow direction.

11. Method of determining the frost point temperature of a gas comprising the following steps:
a. conducting an essentially constant gas flow (2) at an operating pressure through an interlayer (10) having at least one opening (11);
b. measuring pressures upstream and downstream of the interlayer (10) and forming a pressure differential;
c. detecting a change in the pressure differential;
d. detecting a temperature of the interlayer at the time of the change in pressure differential as the frost point temperature, wherein the following step is conducted between steps b. and c.:
e. constantly decreasing or increasing the temperature of the interlayer in the direction of a presumed frost point temperature of the gas.

12. Method according to Claim 11, wherein a measurement bridge is balanced above the presumed frost point temperature and outputs a measurement signal in the event of a change in pressure differential.

13. Method according to Claim 11, wherein a measurement bridge is balanced below the presumed frost point temperature and outputs a measurement signal in the event of a change in pressure differential.

## Revendications

1. Arrangement (1) de détermination de la température du point de congélation d'un gaz, comprenant une couche intermédiaire (10) pourvue d'au moins une ouverture (11), un dispositif de mesure de température (12), un premier dispositif de mesure de pression (23), disposé dans le sens du flux de gaz en amont de la couche intermédiaire (10), et un deuxième dispositif de mesure de pression (24), disposé en aval de la couche intermédiaire (10) dans le sens du flux de gaz, la couche intermédiaire (10) étant reliée thermiquement à un thermocouple (13).

2. Arrangement selon la revendication 1, la couche intermédiaire (10) divisant un espace traversé par un flux de gaz (20) en un premier sous-espace (21) et un deuxième sous-espace (22) et le premier sous-espace (21) est disposé en amont de la couche intermédiaire (10) dans le sens du flux de gaz et le deuxième sous-espace (22) est disposé en aval de la couche intermédiaire (10) dans le sens du flux de gaz.

3. Arrangement selon la revendication 1 ou 2, la couche intermédiaire (10) étant réalisée sous la forme d'un diaphragme à trous.

4. Arrangement selon la revendication 1 ou 2, la couche intermédiaire (10) étant constituée d'un matériau poreux.

5. Arrangement selon la revendication 1, le thermocouple (13) étant un élément Peltier.

6. Arrangement selon l'une des revendications précédentes, les deux dispositifs de mesure de pression (23, 24) étant conçus pour détecter une variation d'une différence de pression qui chute à travers la couche intermédiaire (10).

7. Arrangement selon la revendication 6, les dispositifs de mesure de pression étant configurés de telle sorte qu'ils servent de résistances d'un pont de mesure et sont disposés de telle sorte qu'une variation de la différence de pression produit un signal de mesure.

8. Arrangement selon l'une des revendications précédentes, l'au moins une ouverture (11) présentant un diamètre inférieur à 1 mm, en particulier inférieur à 800 µm ou inférieur à 500 µm.

9. Arrangement selon l'une des revendications précédentes, un diaphragme étant disposé en amont du premier dispositif de mesure de pression (23) dans le sens du flux de gaz.

10. Arrangement selon l'une des revendications précédentes, un diaphragme étant disposé en aval du deuxième dispositif de mesure de pression (24) dans le sens du flux de gaz.

11. Procédé de détermination de la température du point de congélation d'un gaz, comprenant les étapes suivantes :
a. conduire un flux de gaz (2) sensiblement constant à une pression de service à travers une couche intermédiaire (10) comprenant au moins une ouverture (11) ;
b. mesure des pressions en amont et en aval de la couche intermédiaire (10) et formation d'une différence de pression à partir de celles-ci ;
c. identification d'une variation de la différence de pression ;
d. identification d'une température de la couche intermédiaire au moment de la variation de la différence de pression en tant que température du point de congélation, l'étape suivante étant exécutée entre les étapes b. et c. :
e. diminution ou augmentation constante de la température de la couche intermédiaire en direction d'une température de point de congélation supposée du gaz.

12. Procédé selon la revendication 11, un pont de mesure étant étalonné au-dessus de la température de point de congélation supposée et délivrant un signal de mesure en cas de variation de la différence de pression.

13. Procédé selon la revendication 11, un pont de mesure étant étalonné au-dessous de la température de point de congélation supposée et délivrant un signal de mesure en cas de variation de la différence de pression.
